# EUROPEAN PATENT APPLICATION

(11) **EP 4 372 967 A1**
(43) Date of publication of application: **22.05.2024**
(21) Application number: 23197788.5
(22) Date of filing: 15.09.2023
(51) Int. Cl.: H02K 1/2783, H02K 21/12, H02K 1/2792, H02K 21/16, H02K 21/22, H02K 21/24

(54) **ELECTRIC MACHINE HAVING NOTCHED MAGNETS**

(30) Priority: 17.11.2022 US 202217989277
(71) Applicant: Hamilton Sundstrand Corporation, Charlotte, NC 28217-4578 (US)
(72) Inventor: DU, Zhentao Stephen, Rocky Hill, CT 06067 (US); KUCZEK, Andrzej E., Bristol 06010 (US); TANGUDU, Jagadeesh K., South Windsor, CT 06074 (US)
(74) Representative: Dehns

(57) **Abstract**

Aircraft and aircraft electric motors include a rotor assembly comprising a plurality of magnets (214) arranged on a magnet support, an output shaft operably coupled to the rotor assembly, and a stator (210) comprising a support structure and at least one winding wrapped about a plurality of stator teeth, the stator configured to generate an electromagnetic field to cause rotation of the rotor assembly. The magnets are configured in sets arranged circumferentially about the rotor assembly, with each set having a cut-out notch at opposite ends of each set in the circumferential direction and wherein the cut-out notch is at least partially formed in an in-pole magnetization magnet having a radial orientation magnetization.

## Description

### STATEMENT REGARDING FEDERALLY SPONSORED RESEARCH OR DEVELOPMENT

This invention was made with government support under Contract No. DE-AR0001351 awarded by the U.S. Department of Energy. The government has certain rights in the invention.

### BACKGROUND

The present disclosure relates to electric motors, and more particularly, to electric motor assemblies with high efficiency and power density having relatively low weight for aircraft applications.

Traditional electric motors may include a stator and a rotor, with electrical motor windings in the stator that, when energized, drive rotation of the rotor about a central axis. Permanent magnet motors are widely used for high power density and efficient applications in aviation industry. The high torque density can be achieved by maximizing the magnetic loading through implementation of the Halbach array permanent magnet rotor structure; however, the dense permanent magnets can be a major barrier when minimizing the weight of the application. Accordingly, improved electric motor components may be used to improve the weight of such electric motors while also provide additional benefits, such as improved power density and the like.

### BRIEF DESCRIPTION

According to some embodiments of the present disclosure, aircraft electric motors are provided. The aircraft electric motors include a rotor assembly comprising a plurality of magnets arranged on a magnet support, an output shaft operably coupled to the rotor assembly, and a stator comprising a support structure and at least one winding wrapped about a plurality of stator teeth, the stator configured to generate an electromagnetic field to cause rotation of the rotor assembly. The magnets are configured in sets arranged circumferentially about the rotor assembly, with each set having a cut-out notch at opposite ends of each set in the circumferential direction and wherein the cut-out notch is at least partially formed in an in-pole magnetization magnet having a radial orientation magnetization.

In addition to one or more of the features described herein, or as an alternative, further embodiments of the aircraft electric motors may include that at least one in-pole magnetization magnet is a single magnet that is part of two adjacent sets of magnets.

In addition to one or more of the features described herein, or as an alternative, further embodiments of the aircraft electric motors may include that at least one in-pole magnetization magnet is a split magnet, wherein a first part of the split magnet is part of a first set of magnets and a second part of the split magnetic is part of a second set of magnets.

In addition to one or more of the features described herein, or as an alternative, further embodiments of the aircraft electric motors may include a binder between the first part and the second part of the split magnet to secure the first part and the second part of the split magnet together.

In addition to one or more of the features described herein, or as an alternative, further embodiments of the aircraft electric motors may include a binder applied to the magnets to secure the magnets together and to the magnet support.

In addition to one or more of the features described herein, or as an alternative, further embodiments of the aircraft electric motors may include that the binder comprises an epoxy material.

In addition to one or more of the features described herein, or as an alternative, further embodiments of the aircraft electric motors may include a rotor wrap arranged about the magnet support and configured to structurally support the magnet support.

In addition to one or more of the features described herein, or as an alternative, further embodiments of the aircraft electric motors may include that the magnet support comprises a protrusion that is positioned within the cut-out notch.

In addition to one or more of the features described herein, or as an alternative, further embodiments of the aircraft electric motors may include that the rotor assembly includes an outer rotor and an inner rotor, wherein the stator is arranged radially between the inner rotor and the outer rotor.

In addition to one or more of the features described herein, or as an alternative, further embodiments of the aircraft electric motors may include that each of the inner rotor and the outer rotor comprise magnet sets with cut-out notches between adjacent magnet sets.

According to some embodiments, aircraft are provided. The aircraft include at least one aircraft electric motor, at least one electrical device, and a power distribution system configured to distribute power from the at least one electric motor to the at least one electrical device. The at least one aircraft electric motor includes a rotor assembly comprising a plurality of magnets arranged on a magnet support, an output shaft operably coupled to the rotor assembly, and a stator comprising a support structure and at least one winding wrapped about a plurality of stator teeth, the stator configured to generate an electromagnetic field to cause rotation of the rotor assembly. The magnets are configured in sets arranged circumferentially about the rotor assembly, with each set having a cut-out notch at opposite ends of each set in the circumferential direction and wherein the cut-out notch is at least partially formed in an in-pole magnetization magnet having a radial orientation magnetization.

In addition to one or more of the features described herein, or as an alternative, further embodiments of the aircraft may include that at least one in-pole magnetization magnet is a single magnet that is part of two adjacent sets of magnets.

In addition to one or more of the features described herein, or as an alternative, further embodiments of the aircraft may include that at least one in-pole magnetization magnet is a split magnet, wherein a first part of the split magnet is part of a first set of magnets and a second part of the split magnetic is part of a second set of magnets.

In addition to one or more of the features described herein, or as an alternative, further embodiments of the aircraft may include a binder between the first part and the second part of the split magnet to secure the first part and the second part of the split magnet together.

In addition to one or more of the features described herein, or as an alternative, further embodiments of the aircraft may include a binder applied to the magnets to secure the magnets together and to the magnet support.

In addition to one or more of the features described herein, or as an alternative, further embodiments of the aircraft may include that the binder comprises an epoxy material.

In addition to one or more of the features described herein, or as an alternative, further embodiments of the aircraft may include a rotor wrap arranged about the magnet support and configured to structurally support the magnet support.

In addition to one or more of the features described herein, or as an alternative, further embodiments of the aircraft may include that the magnet support comprises a protrusion that is positioned within the cut-out notch.

In addition to one or more of the features described herein, or as an alternative, further embodiments of the aircraft may include that the rotor assembly includes an outer rotor and an inner rotor, wherein the stator is arranged radially between the inner rotor and the outer rotor.

In addition to one or more of the features described herein, or as an alternative, further embodiments of the aircraft may include that each of the inner rotor and the outer rotor comprise magnet sets with cut-out notches between adjacent magnet sets.

The foregoing features and elements may be combined in various combinations without exclusivity, unless expressly indicated otherwise. Features which are described in the context of separate aspects and embodiments may be used together and/or be interchangeable. Similarly, features described in the context of a single embodiment may also be provided separately or in any suitable subcombination. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1A is a partial view of an embodiment of electric motor;
FIG. 1B is a cross-sectional view of an embodiment of a stator core of the electric motor of FIG. 1A;
FIG. 2A is a schematic illustration of an aircraft electric motor in accordance with an embodiment of the present disclosure;
FIG. 2B is a side elevation view of the aircraft electric motor of FIG. 2A;
FIG. 2C is a partial cut-away illustration of the aircraft electric motor of FIG. 2A;
FIG. 2D is a separated-component illustration of the aircraft electric motor of FIG. 2A;
FIG. 3A is a schematic illustration of a rotor and stator of an aircraft electric motor in accordance with an embodiment of the present disclosure;
FIG. 3B is a schematic illustration of the rotor and stator of FIG. 3A as arranged within a rotor sleeve in accordance with an embodiment of the present disclosure;
FIG. 4A is a schematic illustration of a radial cross-section of an aircraft electric motor in accordance with an embodiment of the present disclosure;
FIG. 4B is an enlarged illustration of a portion of the structure shown in FIG. 4A;
FIG. 5A illustrates a conventional magnet Halbach array;
FIG. 5B illustrates a first, non-limiting example of a magnet Halbach array having a cut-out notch in accordance with an embodiment of the present disclosure;
FIG. 5C illustrates a second, non-limiting example of a magnet Halbach array having a cut-out notch in accordance with an embodiment of the present disclosure;
FIG. 5D illustrates a third, non-limiting example of a magnet Halbach array having a cut-out notch in accordance with an embodiment of the present disclosure;
FIG. 5E illustrates a fourth, non-limiting example of a magnet Halbach array having a cut-out notch in accordance with an embodiment of the present disclosure;
FIG. 6A is a per-pole cross sectional illustration of a portion of an electric motor in accordance with an embodiment of the present disclosure;
FIG. 6B is a flux density with flux lines plot of the magnetic flux of the portion of the electric motor shown in FIG. 6A;
FIG. 7 is a schematic illustration of a portion of a rotor in accordance with an embodiment of the present disclosure; and
FIG. 8 is a schematic view of a power system of an aircraft that may employ embodiments of the present disclosure.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### DETAILED DESCRIPTION

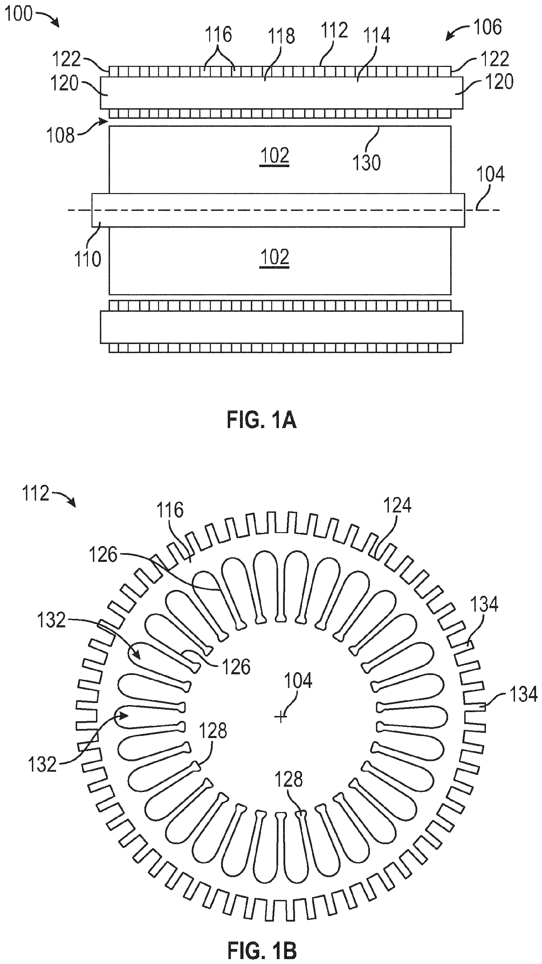

Referring to FIGS. 1A-1B, schematic illustrations of an electric motor 100 that may incorporate embodiments of the present disclosure are shown. FIG. 1A illustrates a cross-sectional view of the electric motor 100 and FIG. 1B illustrates a cross-sectional view of a stator core of the electric motor 100. The electric motor 100 includes a rotor 102 configured to rotate about a rotation axis 104. A stator 106 is located radially outboard of the rotor 102 relative to the rotation axis 104, with a radial airgap 108 located between the rotor 102 and the stator 106. As illustrated, the rotor 102 may be mounted on a shaft 110 which may impart rotational movement to the rotor 102 or may be driven by rotation of the rotor 102, as will be appreciated by those of skill in the art. The rotor 102 and the shaft 110 may be fixed together such that the rotor 102 and the shaft 110 rotate about the rotation axis 104 together as one piece.

The stator 106 includes a stator core 112 in which a plurality of electrically conductive stator windings 114 are disposed. In some embodiments, such as shown in FIG. 1A, the stator core 112 is formed from a plurality of axially stacked laminations 116, which are stacked along the rotation axis 104. In some embodiments, the laminations 116 are formed from a steel material, but one skilled in the art will readily appreciate that other materials may be utilized. The stator windings 114, as shown, include core segments 118 extending through the stator core 112 and end turn segments 120 extending from each axial stator end 122 of the stator core 112 and connecting circumferentially adjacent core segments 118. When the stator windings 114 are energized via an electrical current therethrough, the resulting field drives rotation of the rotor 102 about the rotation axis 104.Although FIG. 1A illustrates the stator core 112 arranged radially inward from the stator windings 114, it will be appreciated that other configurations are possible without departing from the scope of the present disclosure. For example, in some embodiments, the stator structure may be arranged radially inward from a rotating rotor structure.

FIG. 1B is an axial cross-sectional view of the stator core 112. Each lamination 116 of the stator core 112 includes a radially outer rim 124 with a plurality of stator teeth 126 extending radially inwardly from the outer rim 124 toward the rotation axis 104. Each of the stator teeth 126 terminate at a tooth tip 128, which, together with a rotor outer surface 130 (shown in FIG. 1A) of the rotor 102, may define the radial airgap 108. Circumferentially adjacent stator teeth 126 define an axially-extending tooth gap 132 therebetween. Further, in some embodiments, a plurality of stator fins 134 extend radially outwardly from the outer rim 124.

Electric motors, as shown in FIGS. 1A-1B may require cooling due to high density configurations, various operational parameters, or for other reasons. For example, high-power-density aviation-class electric motors and drives may require advanced cooling technologies to ensure proper operation of the motors/drives. These machines are generally thermally limited at high power ratings and their performance can be improved by mitigating thermal limitations. To maintain desired temperatures, a thermal management system (TMS) is integrated into the system, which provides cooling to components of the system. Onboard an aircraft, power requirements, and thus thermal management system (TMS) loads, are substantially higher during takeoff. Sizing of the TMS for takeoff conditions (i.e., maximum loads) results in a TMS having a high weight to accommodate such loads. This results in greater weight and lower power density during cruise conditions which do not generate such loads, and thus does not require a high cooling capacity TMS. Balancing weight constraints and thermal load capacities is important for such aviation applications.

In view of such considerations, improved aviation electric motors are provided herein. The aviation electric motors or aircraft electric motors, described herein, incorporate lightweight materials and compact design to reduce weight, improve thermal efficiencies, improve power efficiencies, and improve power density.

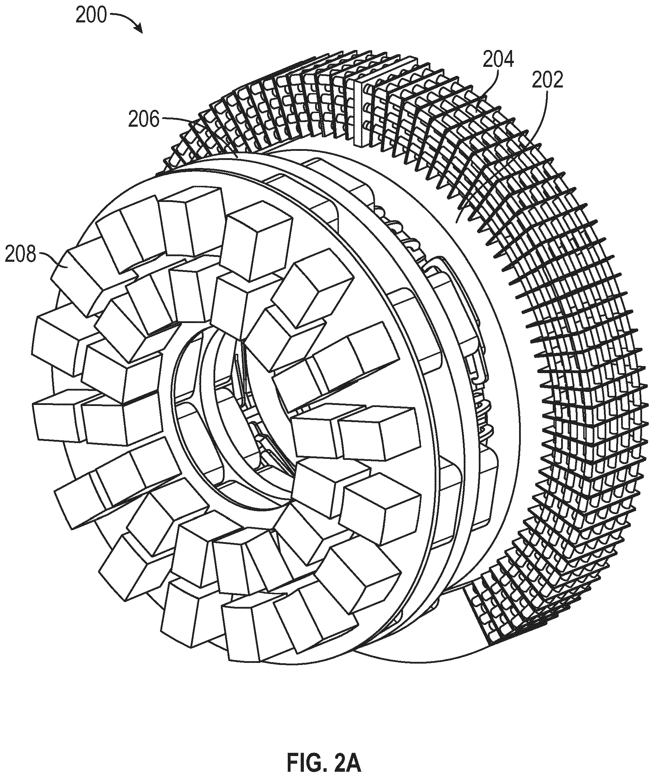

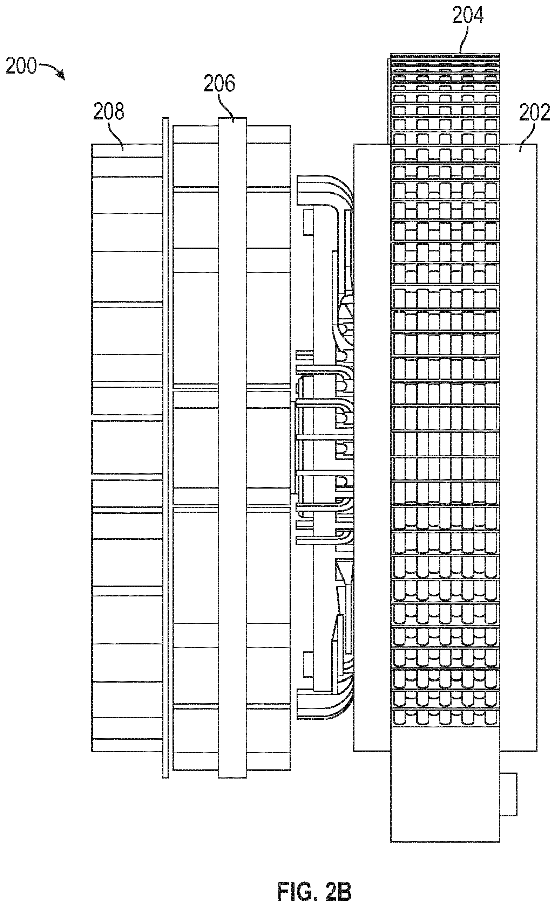

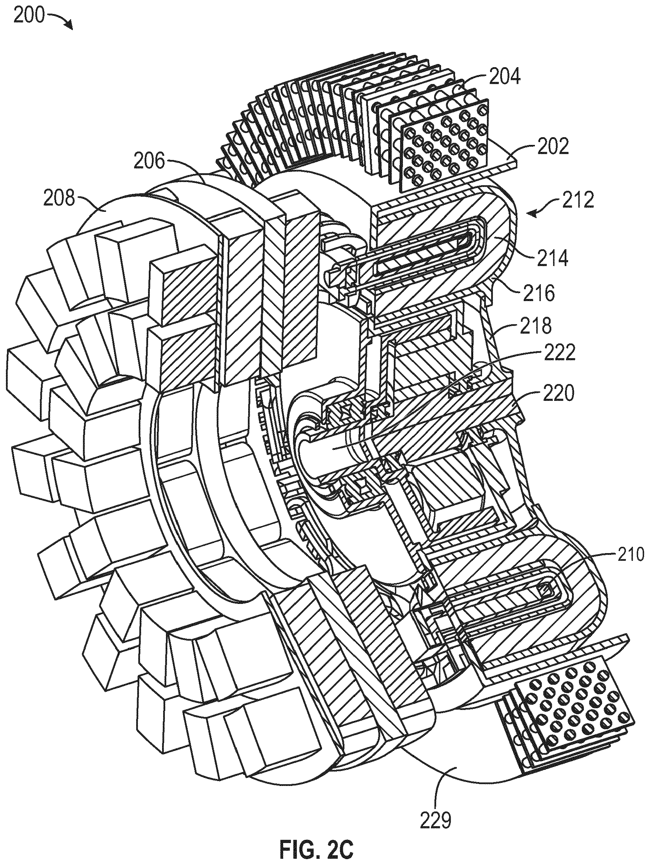

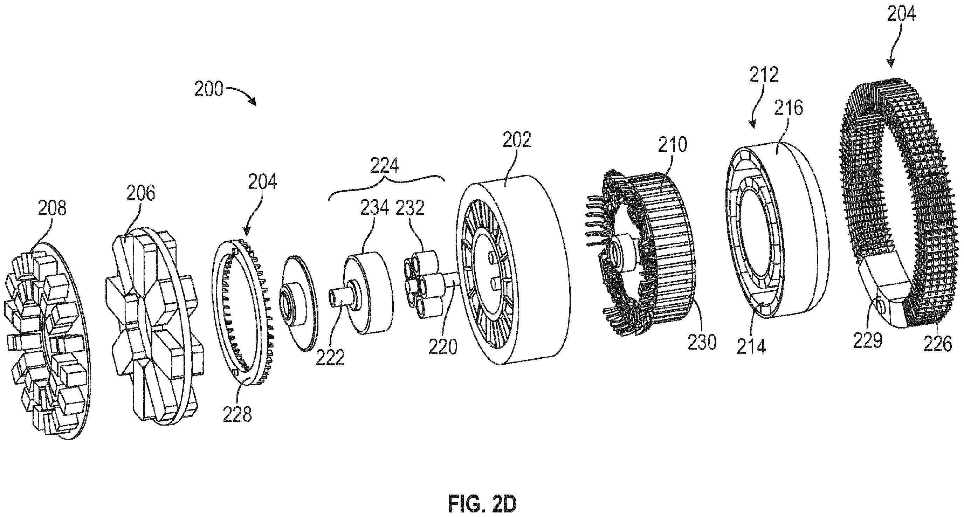

Turning now to FIGS. 2A-2D, schematic illustrations of an aircraft electric motor 200 in accordance with an embodiment of the present disclosure are shown. FIG. 2A is an isometric illustration of the aircraft electric motor 200, FIG. 2B is a side elevation view of the aircraft electric motor 200, FIG. 2C is a partial cut-away view illustrating internal components of the aircraft electric motor 200, and FIG. 2D is a schematic illustration of components of the aircraft electric motor 200 as separated from each other. The aircraft electric motor 200 includes a motor housing 202, a cooling system 204, a first power module system 206, and a second power module system 208.

The motor housing 202 houses a stator 210 and a rotor 212, with the rotor 212 configured to be rotatable about the stator 210. In this illustrative embodiment, the rotor 212 includes a U-shaped magnet 214 arranged within a similarly shaped U-shaped rotor sleeve 216. The rotor sleeve 216 is operably connected to a hub 218. The hub 218 is fixedly attached to a first shaft 220. The first shaft 220 is operably connected to a second shaft 222. In some configurations, the first shaft 220 may be a high speed shaft and may be referred to as an input shaft. In such configurations, the second shaft 222 may be a low speed shaft and may be referred to as an output shaft. The connection between the first shaft 220 and the second shaft 222 may be by a gear assembly 224, as described herein.

The cooling system 204 is configured to provide cooling to the components of the aircraft electric motor 200. The cooling system 204, as shown in FIG. 2D, includes a heat exchanger 226 and a header 228. The heat exchanger 226 and the header 228 may form a closed-loop cooling system that may provide air-cooling to a working fluid at the heat exchanger 226. The header 228 may be, in some configurations, a two-phase di-electric cooling header. A cooled working fluid may be pumped from the heat exchanger 226 into the header 228 using a pump 229 and distributed into embedded cooling channels 230 that are arranged within the stator 210. As the aircraft electric motor 200 is operated, heat is generated and picked up by the working fluid within the embedded cooling channels 230. This heated working fluid is then passed through the header 228 back to the heat exchanger 226 to be cooled, such as by air cooling. Although described as air-cooling, other cooling processes may be employed without departing from the scope of the present disclosure.

As shown, the heat exchanger 226 of the cooling system 204 may be a circular or annular structure that is arranged about the motor housing 202. This configuration and arrangement allows for improved compactness of the system, which may be advantageous for aircraft applications. The rotor sleeve 216 with the magnets 214, the stator 210, and the gear assembly 224 fit together (although moveable relative to each other) within the motor housing 202, providing for a compact (low volume/size) design.

As noted above, the rotor sleeve 216 may be operably coupled to a first shaft 220 by the hub 218. The first shaft 220 may be operably coupled to a first gear element 232 and the second shaft 222 may be operably coupled to a second gear element 234. The first and second gear elements 232, 234 may form the gear assembly 224. The first and second gear elements 232, 234 are arranged to transfer rotational movement from the first shaft 220, which is driven in rotation by the hub 218 and the rotor sleeve 216 of the rotor 212, to the second shaft 222. In some embodiments, the first shaft 220 may be operably connected to a sun gear as the first gear element 232 that engages with a plurality of planetary gears and drives rotation of the second gear element 234 which may be operably connected to the second shaft 222. In some embodiments, the second shaft 222 may be connected to a fan or other component to be rotated by the aircraft electric motor 200.

The aircraft electric motor 200 includes the first power module system 206 and the second power module system 208. The first and second power module systems 206, 208 can include capacitors and other electronics, including, but not limited to, printed circuit boards (PCBs) that are configured to control and operate the aircraft electric motor 200. Again, the profile of the aircraft electric motor 200 of the present disclosure presents a low profile or compact arrangement that reduces the volume of the entire power system, which in turn can provide for improved weight reductions. In some embodiments, the first and second power module systems 206, 208 may be electrically connected to the stator 210 to cause an electric current therein. As the electric current will induce an electromagnetic field which will cause the rotor 212 to rotate.

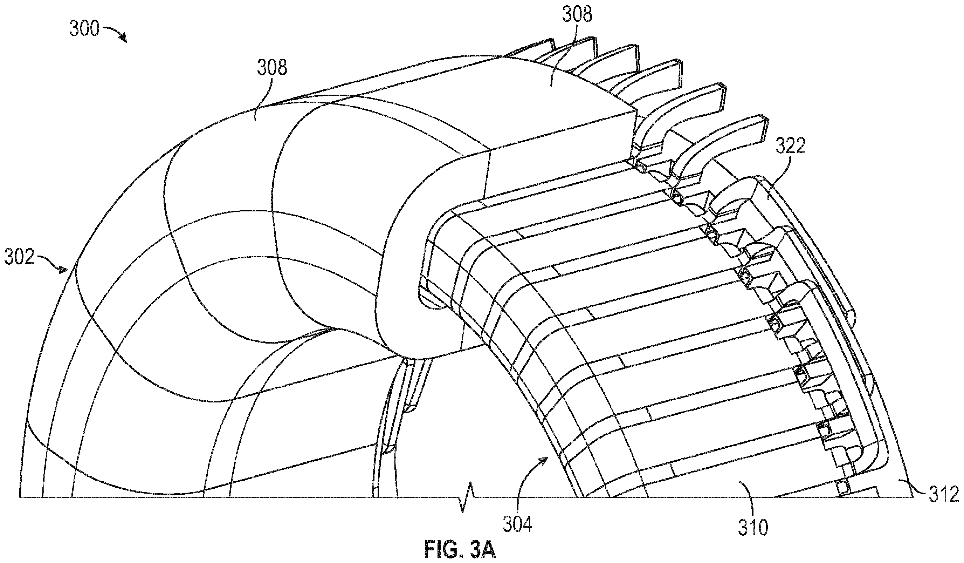

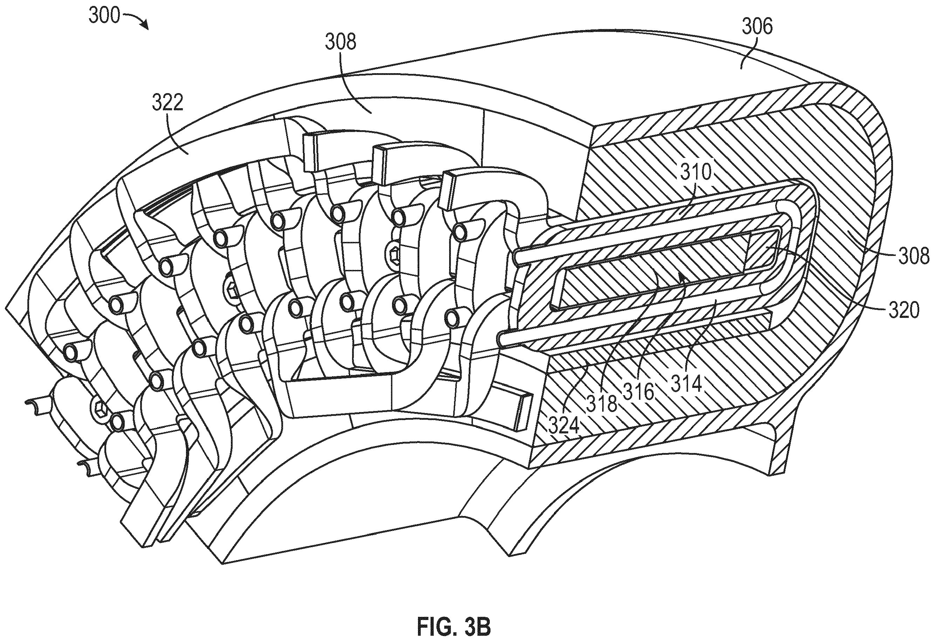

Referring now to FIGS. 3A-3B, schematic illustrations of a portion of an aircraft electric motor 300 in accordance with an embodiment of the present disclosure is shown. FIGS. 3A-3B illustrate a portion of a rotor 302 and a stator 304 of the aircraft electric motor 300. FIG. 3A illustrates the rotor 302 and the stator 304 and FIG. 3B illustrates these components arranged within a rotor sleeve 306.

The rotor 302 is formed of a plurality of U-shaped magnets 308. In some configurations, the plurality of magnets 308 can be arranged with alternating polarity in a circular structure. Arranged within the "U" of the U-shaped magnets 308 is the stator 304. The stator 304 is formed of a plurality of windings 310. In this configuration, the windings 310 are arranged with a header 312. The header 312 may be part of a cooling system, such as that shown and described above. The header 312 can be configured to cycle a working fluid through cooling channels 314 for cooling of the windings 310, as shown in FIG. 3B.

The windings 310 may be wrapped about a support structure 316 (e.g., back iron or yoke). The support structure 316, in some embodiments and as shown in FIG. 3B, may include a laminate portion 318 and a magnetic portion 320. In some such embodiments, the laminate portion 318 may be formed from cobalt steel laminate and the magnetic portion 320 may be formed from a soft magnetic composite. The laminate portion 318 may be provided to capture in-plane flux from outer and inner rotor. The magnetic portion 320 may be provided to capture end rotor flux and may take a shape/filler in a gap through the end turns of the coil. The windings 310 include end connections 322 and may be electrically connected to one or more power module systems of the aircraft electric motor, such as shown above.

As shown in FIG. 3B, the magnets 308 are U-shaped and arranged within the rotor sleeve 306. The rotor sleeve 306 is a substantially U-shaped sleeve that is sized and shaped to receive the U-shaped magnets 308. In this illustrative configuration, the rotor sleeve 306 can include an inner sleeve 324. The inner sleeve 324 may be configured to provide support to a portion of the magnets 308. It will be appreciated that there is no direct contact between the windings 310 and the magnets 308. This lack of contact allows for free rotation of the rotor 302 relative to the stator 304 during operation.

In aviation-class electric motors, such as shown and described above, a high-power density can be achieved by maximizing torque at a given speed. The torque density can be increased by improving utilization of magnetic materials and increase magnetic loading. Prior concepts for maximizing power density was achieved through minimizing the core of the rotor system. However, such minimization has an impact on magnetic loading (average airgap flux density). Conventionally, introducing a magnetic tooth can increase magnetic loading but may also increase torque ripple. Torque ripple is an effect seen in electric motor designs and refers to a periodic increase or decrease in output torque as the motor shaft rotates. Accordingly, it is desirable to both maximize magnetic loading while minimizing torque ripple. In view of this, embodiments of the present disclosure are directed to incorporating non-magnetic teeth and/or non-magnetic back iron, yoke, or support structure within the motor assembly. The non-magnetic structures (teeth and/or support structure) are made from non-magnetic materials (e.g., potting material, ceramic, etc.) may be infused or embedded with magnetic wires In accordance with embodiments of the present disclosure, the introduction of magnetic wire-infused teeth and/or support structures results in reduced weight and improved power density. Further, advantageously, such configurations can provide a low weight solution without sacrificing average torque of the motor. Shaping of the wires near an airgap (e.g., to the magnets of the motor) can also help manipulate the harmonics in the airgap and result in redistribution of torque ripple harmonics and reduce torque ripple without impacting average torque.

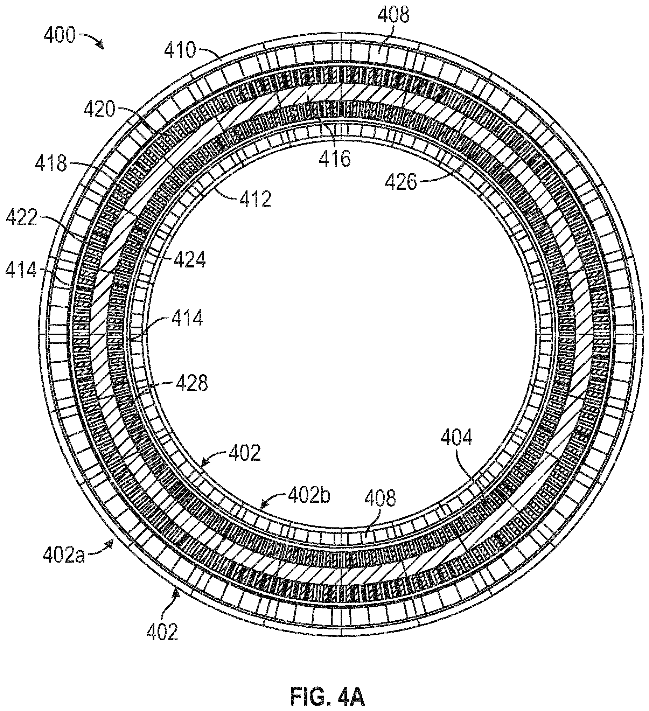

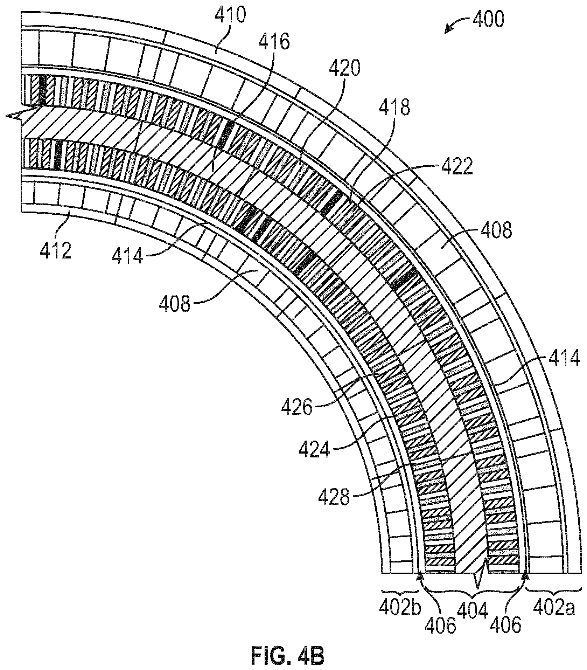

Referring to FIGS. 4A-4B, schematic illustrations of a portion of an aircraft electric motor 400 in accordance with an embodiment of the present disclosure is shown. FIGS. 4A-4B illustrate a portion of a rotor 402 and a stator 404 of the aircraft electric motor 400. FIG. 4A illustrates the full circular structure of the rotor 402 and the stator 404 and FIG. 4B illustrates an enlarged illustration of a portion of the rotor 402 and the stator 404. The rotor 402 and the stator 404 may be part of an aircraft electric motor similar to that shown and described herein and used as described herein.

As shown, the rotor 402 is arranged about the stator 404, with an outer portion 402a and an inner portion 402b arranged radially outward and inward from the stator 404, respectively. The outer and inner portions 402a, 402b may be parts of a substantially U-shaped magnet assembly, as shown and described above. The stator 404 is arranged between the outer and inner portions 402a, 402b with an airgap 406 therebetween, as shown in FIG. 4B. The rotor 404 includes a plurality of magnets 408, which may be substantially U-shaped and span from the outer portion 402a to the inner portion 402b. An outer rotor sleeve 410 and an inner rotor sleeve 412 may be separate components or a continuous structure, as shown and described above, and are configured to support and retain the magnets 408 of the rotor 402. Further, one or more retention sleeves 414 may be arranged on a side of the magnets 408 that faces the stator 404. The rotor 402 is configured to be rotationally driven by current that is passed through the stator 404.

The stator 404 includes a support structure 416 (e.g., a back iron or yoke). The support structure 416 supports, on a radial outer side thereof, a plurality of outer teeth 418, outer coils 420, and outer cooling channels 422. Similarly, on a radially inner side of the support structure 416 are arranged a plurality of inner teeth 424, inner coils 426, and inner cooling channels 428.

In some embodiments of the present disclosure, one or more of the outer teeth 418, the inner teeth 424, and/or the support structure 416 may be made of a non-magnetic material with embedded magnetic wires. In some example embodiments, each of the outer teeth 418 the inner teeth 424, and/or the support structure 416 may be formed of a non-magnetic material with embedded magnetic wires and shaped to reduce torque ripple while increasing magnetic loading and improving manufacturability and address stack-up tolerance challenges.

As shown in FIG. 4A, the rotor 402 and stator 404 form a substantially ring-shape or annular shape. As shown, the outer teeth 418 and the inner teeth 424 are each arranged in a circumferential arrangement and extend radially from the support structure 416. The outer teeth 418 extend radially outward from the support structure 416 and the inner teeth 424 extend radially inward from the support structure 416. In some configurations, the teeth 418, 424 may be the same in shape, orientation, material, and the like about the circumferences of the stator 404. In other embodiments, the teeth 418, 424 may be arranged in sets or specific configurations arranged in a repeating pattern about the respective circumferential arrangement.

Permanent magnet motors are widely used for high power density and efficient applications in aviation industry. The high torque density can be achieved by maximizing the magnetic loading through implementation of the Halbach array permanent magnet rotor structure; however, the dense permanent magnets can be a major barrier when minimizing the weight of the application. Accordingly, improved electric motor components may be used to improve the weight of such electric motors while also provide additional benefits, such as improved power density and the like.

In accordance with embodiments of the present disclosure, optimal shaped Halbach array magnets with a notch cut-out in the inner rotor and outer rotor are provided. The modified magnets may effectively reduce the weight of the magnets while also improving the power density thereof. In accordance with some embodiments, the notch cut-out may be made at an in-pole magnetization magnet (i.e., magnetization orthogonal to the airgap) in the Halbach array and may be positioned such that the cut-out is not in the magnetic flux path, resulting in minimal impact on torque production. In accordance with some embodiments, the notch shape cut-out area can be optimized in a way such that the magnet weight reduction is maximized while the torque impact is minimized. Magnet loss is reduced accordingly, improving the efficiency and life of motors. In some configurations and arrangements in accordance with embodiments of the present disclosure, when the magnetic flux is substantially constant along the Halbach array structure it is indicative that the magnet materials are used optimally and effectively. In some embodiments, the cut-out area can be replaced by a rotor dovetail for magnet insertion onto the rotor structure, providing improved mechanical integrity.

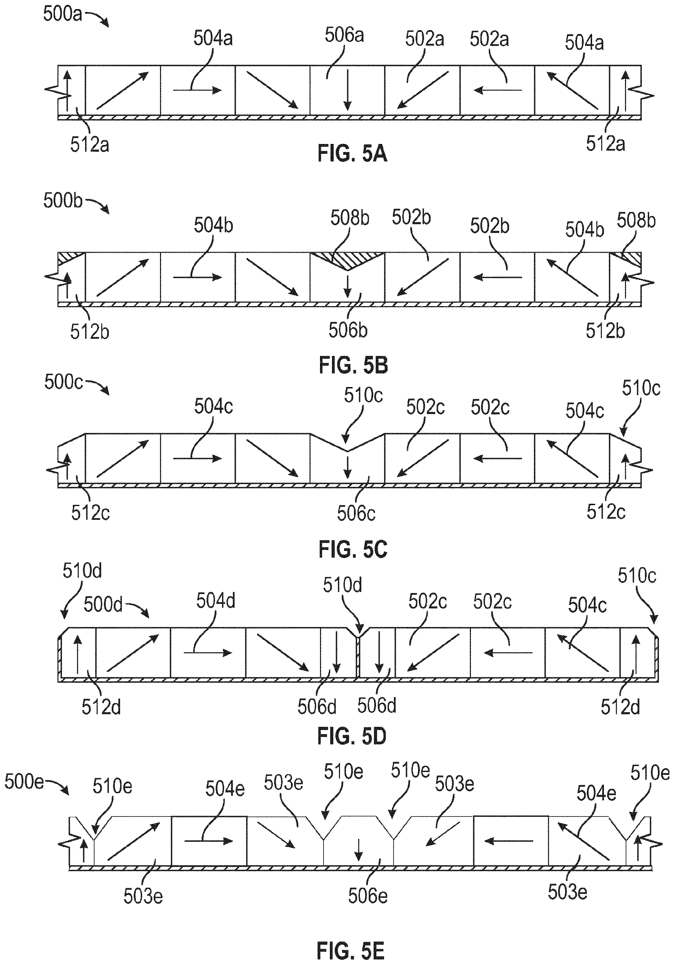

Referring now to FIGS. 5A-5E, schematic illustrations of different magnet Halbach arrays 500a-d are shown. The magnet Halbach arrays 500a-d may be incorporated into an electric motor or the like, as shown and described above. Although illustratively shown as linear arrays, those of skill in the art will appreciate that this is merely representative (i.e., the number of arrays is not limited to four as illustrated and can be other count), and the magnet Halbach arrays 500a-d may be configured as part of a circular or annular structure to be arranged, for example, within a system as shown and described above.

A first magnet Halbach array 500a (FIG. 5A) is illustrative of a conventional Halbach Array. The first magnet Halbach array 500a is formed from a set of magnets 502a that are arranged to cause a magnetic field 504a to be formed thereby. The magnetic field 504a is illustratively shown by arrows indicative of the magnetic field direction. An in-pole magnetization magnet 506a is shown where the magnetic field 504a aligns between two fields (i.e., left and right of the in-pole magnetization magnet 506a).

A second magnet Halbach array 500b (FIG. 5B) is shown in accordance with an embodiment of the present disclosure. As shown, the second magnet Halbach array 500b is a modification of the conventional Halbach Array, as configured in the first magnet Halbach array 500a. The second magnet Halbach array 500b is formed of a set of magnets 502b arranged similarly to that in the first magnet Halbach array 500a, but includes a reduction region 508b that indicates material of an in-pole magnetization magnet 506b that may be removed. As shown, the magnetic field 504b of the second magnet Halbach array 500b is essentially the same as the magnetic field 504a of the first magnet Halbach array 500a.

A third magnet Halbach array 500c (FIG. 5C) in accordance with an embodiment of the present disclosure, illustrates a configuration where material of an in-pole magnetization magnet 506c is removed in the form of a cut-out notch 510c. Similar to the first and second magnet Halbach arrays 500a, 500b, the third magnet Halbach array 500c has a similar magnetic flux and field orientation. The cut-out notch 510c serves reduce the material and weight of the in-pole magnetization magnet 506c. As illustratively shown, a magnetic field 504c generated by magnets 502c of the third magnet Halbach array 500c is similar to that of the first and second magnet Halbach arrays 500a, 500b. It has been observed that such cut-out notches 510c, as implemented in in-pole magnetization magnets (e.g., in-pole magnetization magnet 5106c) that are not in the magnetic flux path, does not significantly or appreciably impact the operational capacity of the magnet Halbach array.

A fourth magnet Halbach array 500d (FIG. 5D) in accordance with an embodiment of the present disclosure, is shown with an in-pole magnetization magnet 506d that is a split magnet. The fourth magnet Halbach array 500d is formed of a set of magnets 502d that generate a magnetic field 504d. Because the in-pole magnetization magnet 506d is a split magnet, a cut-out notch 510d may be provided at the interface between the two split magnets of the in-pole magnetization magnet 506d. As shown in this illustration, the far ends of the illustrative fourth magnet Halbach array 500d may also include cut-out notches 510d and may be formed of split magnets similar to the split in-pole magnetization magnet 506d. That is, the far ends of the illustrative fourth magnet Halbach array 500d are the same magnet but opposite magnetization with the same cut-out notches.

A fifth magnet Halbach array 500e (FIG. 5E) in accordance with an embodiment of the present disclosure, is shown with an in-pole magnetization magnet 506e that is a single magnet (although a split magnet similar to 506d may be employed). The fifth magnet Halbach array 500e is formed of a set of magnets that generate a magnetic field 504e. In this configuration, the in-pole magnetization magnet 506e includes two cut-outs 510e at sides of the in-pole magnetization magnet 506e. As a result, the adjacent non-in-pole magnetization magnets (labeled 503e) may also include a cut-out notch or part of a cut-out notch. As such, in accordance with some embodiments of the present disclosure, there are some configurations where the in-pole magnetization magnet includes at least a part of the cut-notch, but not necessarily the entire cut-out notch. For example, as shown, a part of the cut-out notch may be formed by an adjacent non-in-pole magnetization magnet 503e. Although shown with two cut-out notches 510e, in other embodiments, one or the other cut-out notch 510e may be removed, such that only one of the two cut-out notches 510e is present.

As used herein, the term "in-pole magnetization magnet" refers to a magnet of a magnetic array or set that has magnetization orthogonal to the air gap (e.g., directly into the air gap). Stated another way, in the case of circular rotors and thus arcuate sets of magnets or arcuate sets of magnet arrays, the in-pole magnetization magnet is the magnet having a radial direction of magnetization (either radially inward or radially outward). In FIG. 5, the central magnet 506a-d of each array 500a-d is an in-pole magnetization magnet, with the magnetization oriented downward on the page (or radially inward in the case of a circular rotor). In the illustrated drawings, the farthest end magnets 512a-d are also in-pole magnetization magnets, although with a magnetization orientated upward on the page (or radially outward in the case of a circular rotor).

In the illustrative configurations of the third and fourth magnet Halbach arrays 500c, 500d, the cut-out notches 510c, 510d are illustrated having different relative sizes as compared to the respective in-pole magnetization magnets 506c, 506d. For example, in some embodiments, the single-magnet 510c could have a geometric shape similar to that shown with respect to the split-magnet 510d, or vice versa. Further, it will be appreciated that the size, shape, and dimensions of the cut-out notches of embodiments of the present disclosure may take any form to achieve a reduction in weight while maintaining or increased electric motor efficiencies. For example, the amount of material removed to form the cut-out notches, in accordance with some non-limiting embodiments of the present disclosure may be between 5% and 40% of the total magnet volume. In some embodiments, the removed material may be between 10% and 20%, and in some embodiments may be less than 25% of the total volume. The amount of material removed is selected to reduce the weight without impairing the power density of a given design and thus may be selected based on a particular configuration and/or application. When referring to the amount of material removed with respect to a split-magnet, because the measurement is based on volume, there is no change in the respective measurements and ratios. However, in some embodiments, even when using a split-magnet, the reduction in volume may be based on a calculation of the combined split-magnet (i.e., both halves) and not referring specifically to each separate portion of the split-magnet.

The magnets of the various configurations may be permanent magnets, which may be formed from, for example and without limitation, neodymium, samarium cobalt, alnico, ferrite, or other materials, as will be appreciated by those of skill in the art. The permanent magnets, formed from these materials, are relatively heavy, and thus the reduction of even some of the material can provide weight advantages as compared to systems that do not include such cut-out notches. As such, improved wight reductions may be achieved through implementation of embodiments described herein. Moreover, the cut-out notch may improve the power density of electric motors that incorporate such embodiments. For example, when considering a lightweight aerospace permanent magnet motor relying on dense neodymium Halbach array magnets to produce high rotor magnetic loading, a 25% reduction in volve of an in-pole magnetization magnet, as described herein, can result in approximately 10-15% rotor weight reduction resulting in an improved power-to-weight ratio of the motor.

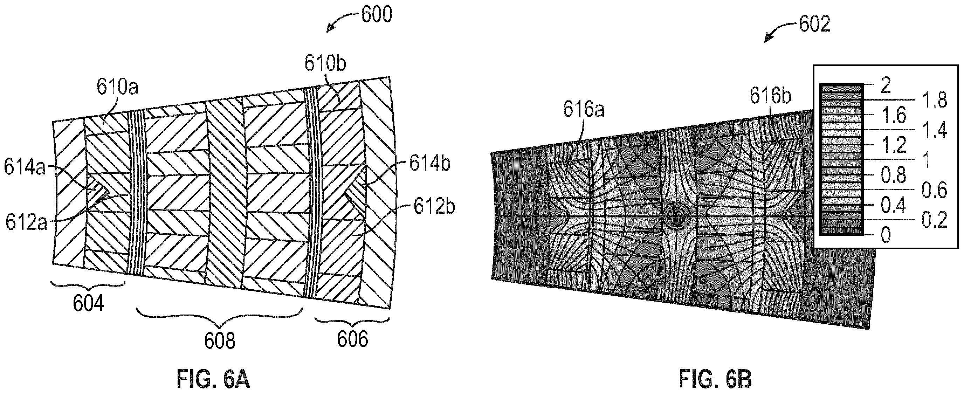

Referring now to FIGS. 6A-6B, schematic illustrations of an embodiment of the present disclosure are shown. FIG. 6A illustrates a portion of an electric motor 600 that incorporates features of the present disclosure and FIG. 6B is a magnetic flux diagram 602 representative of the magnetic flux of the portion of the electric motor 600 shown in FIG. 6A. The electric motor 600 includes an inner rotor 604, an outer rotor 606, and a stator 608 arranged therebetween. The rotors 604, 606 and the stator 608 may be configured and arranged within the electric motor 600 in a manner as shown and described above. Each of the rotors 604, 606 are formed from magnet Halbach arrays 610a, 610b arranged in sets of Halbach arrays or the like. Similar to some of the configurations shown in FIG. 5, an in-pole magnetization magnet 612a, 612b of the inner rotor 604 and the outer rotor 606, respectively, includes a cut-out notch 614a, 614b, respectively. The magnetic flux of the electric motor 600 in the magnetic flux diagram 602 of FIG. 6B. As shown, there is a constant flux density 616a, 616b even with inclusion of the cut-out notches 614a, 614b. That is, the removal of material of the in-pole magnetization magnets 612a, 612b does not negatively impact the magnetic flux of the respective magnet Halbach arrays 610a, 610b. The cut-out notch 614a, 614b may be empty (i.e., air-filled) or may be replaced with a light weight material or filler that may serve to fill the space of the cut-out notch 614a, 614b without significantly increasing the weight of the electric motor 600 (e.g., as compared to notched magnets with no filler).

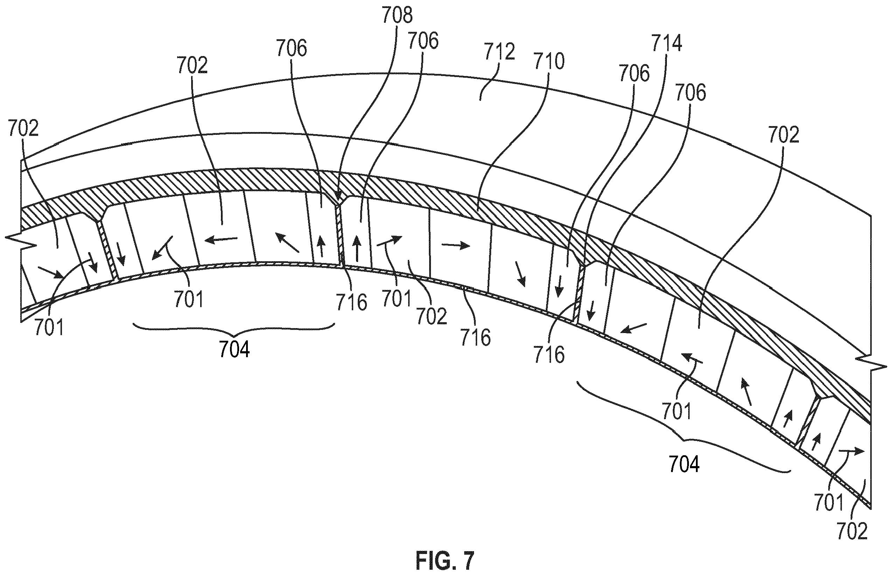

Referring now to FIG. 7, a schematic illustration of a portion of a rotor 700 for use in an electric motor in accordance with an embodiment of the present disclosure is shown. The rotor 700 in this illustrative embodiment is configured as an outer rotor that is intended to be positioned radially outward from a stator, and a second (inner) rotor may be positioned radially inward from the stator (e.g., as shown in FIGS. 4A-4B).

The rotor 700 is formed from a plurality of magnets 702 that are arranged to form the rotor 700. The magnets 702 are grouped into sets 704, which may be referred to as a pole. Each set 704 of magnets 702 may include a split magnet 706 at the ends of each set 704. For two adjacent sets 704, the split magnets 706 at the ends of the respective sets 704 are arranged adjacent to each other. Further, the split magnets 706, when arranged in the rotor 700 define a cut-out notch 708, similar to that shown and described above. The split magnets 706 may be arranged as in-pole magnetization magnets that have a magnetization that is oriented in a radial direction relative to the rotor 700 (e.g., either radially inward or radially outward), as shown by the magnetization arrows 701 illustrated in FIG. 7

In this illustrative configuration, the magnets 702 are supported in the rotor 700 on a magnet support 710, which may be a metallic (e.g., aluminum or other metal) structure. Wrapped about the magnet support 710 is a rotor wrap 712. The rotor wrap 712, in some non-limiting embodiments, may be formed of carbon fiber or other material. It will be appreciated that the rotor wrap 712 may be formed from a non-metallic and/or non-magnetic material and the magnet support 710 may be formed a non-magnetic metal or other material to provide structural stability and support to the magnets 702 during operation of the rotor 700 when installed within an electric motor or the like.

The magnet support 710 may include protrusions 714 that are sized and shaped to fill the cut-out notch 708 between the split magnets 706, as shown in FIG. 7. It will be appreciated that in other configurations, a split magnet may not be employed, but rather a single magnet with a cut-out notch may be provided (e.g., as shown in FIG. 5). However, as illustrated, the magnets between adjacent sets 704 of magnets 702 are formed as the split magnets 706. The rotor 700 may include a binder 716 that is configured to bond the magnets 702, 706 together. As shown, the binder 716 may be applied to an inner radial surface of the magnets 702, 706. As such, the magnets 702, 706 are retained within the rotor 700 between the binder 716 on a first side (e.g., the radially inward side in this illustration) and the magnet support 710 on a second side (e.g., the radially outward side). It will be appreciated that for an inner rotor configuration (e.g., inner rotor 604 shown in FIG. 6A), the binder may be arranged on the radially outward side of the magnets and the magnet support may be arranged on the radially inward side of the magnets. As such, the illustrative arrangement and orientation of components is not intended to be limiting, but rather is provided for illustrative and explanatory purposes. The binder 716 may be an epoxy or other similar material that does not impact the magnetic properties of the magnets 702, 706, but provides a mechanical and/or structural mechanism to hold and retain the magnets 702, 706 in place.

In the illustrative embodiment of FIG. 7, the binder 716 may be arranged between the split magnets 706 of adjacent sets 704 of magnets 702. In some embodiments, the binder may have a thickness that is sufficiently small to avoid impacting the magnetic field properties of the split magnets 706. For example, in a non-limiting embodiment, the binder 716 may have a thickness of between 0.2mm and 1.0mm, or between 0.4mm and 0.8mm, or about 0.6mm. Further, the binder 716 may be arranged to bind or attach the surfaces of the split magnets 706 that define the cut-out notch 708 to the protrusions 714 of the magnet support 710. In some embodiments, the protrusions 714 may form dovetail structures for receiving the magnets 702 and provide additional structural retention of the magnets 702 to the magnet support 710.

In FIG. 7, each set 704 of magnets 702 is formed of three full magnets 702 and two split magnets 706 at each end of the set 704. In a configuration with nonsplit magnets, each set 704 of magnets 702 may share an end magnet with an adjacent set (e.g., as shown in FIG. 5), with the end magnets having the cut-out notch formed therein. Although shown with three whole magnets and a notched magnet (either split or not) at the ends of the sets 704, those of skill in the art will appreciate that each set may be formed of any number of magnets, and the illustrative configurations are merely provided for illustrative and explanatory purposes.

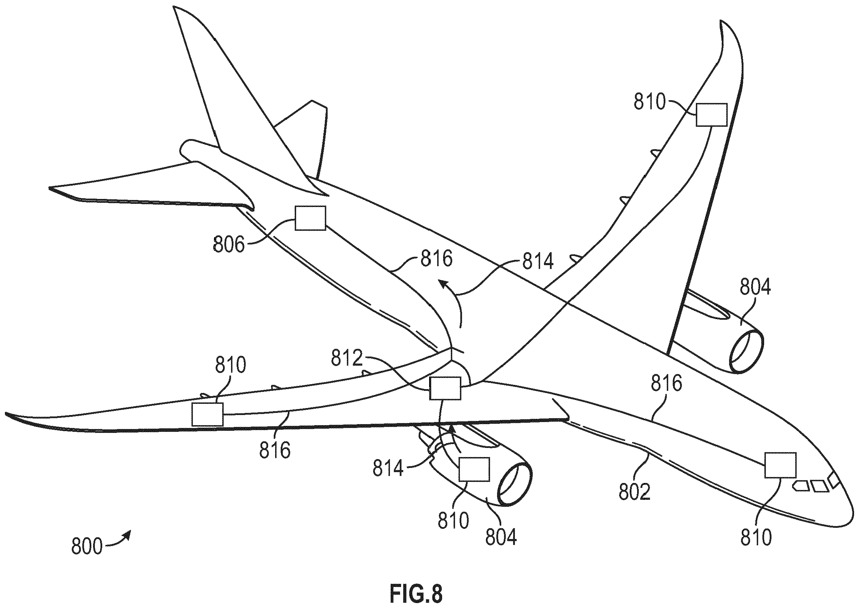

Referring now to FIG. 8, a power system 800 of an aircraft 802 is schematically shown. The power system 800 includes one or more engines 804, one or more electric motors 806, a power bus electrically connecting the various power sources 804, 806, and a plurality of electrical devices 810 that may be powered by the engines 804 and/or motors 806. The power system 800 includes a power distribution system 812 that distributes power 814 through power lines or cables 816. The electric motors 806 be configured as the aircraft electric motors shown and described herein and/or incorporate features as described herein.

Advantageously, embodiments of the present disclosure provide for improved electric motors for aircraft and aviation applications. The aircraft electric motors of the present disclosure may provide for electric motors having reduced motor weight, increased efficiency, and increased manufacturability. Further, embodiments of the present disclosure may achieve such improvements while having negligible impact on torque production and increased power density. The cut-out notches of the rotors, as described herein, provide for the reduction in material of the magnets which in turn reduces the total weight of the system.

The terms "about" and "substantially" are intended to include the degree of error associated with measurement of the particular quantity based upon the equipment available at the time of filing the application. For example, "about" or "substantially" can include a range of ± 8% or 5%, or 2% of a given value. The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiment disclosed as the best mode contemplated for carrying out this present disclosure, but that the present disclosure will include all embodiments falling within the scope of the claims.

## Claims

1. An aircraft electric motor comprising:
a rotor assembly comprising a plurality of magnets (214) arranged on a magnet support;
an output shaft operably coupled to the rotor assembly; and
a stator (210) comprising a support structure and at least one winding wrapped about a plurality of stator teeth, the stator configured to generate an electromagnetic field to cause rotation of the rotor assembly;
wherein the magnets (214) are configured in sets arranged circumferentially about the rotor assembly, with each set having a cut-out notch at opposite ends of each set in the circumferential direction and wherein the cut-out notch is at least partially formed in an in-pole magnetization magnet having a radial orientation magnetization.

2. The aircraft electric motor of claim 1, wherein at least one in-pole magnetization magnet is a single magnet that is part of two adjacent sets of magnets.

3. The aircraft electric motor of claim 1 or 2, wherein at least one in-pole magnetization magnet is a split magnet, wherein a first part of the split magnet is part of a first set of magnets and a second part of the split magnetic is part of a second set of magnets.

4. The aircraft electric motor of claim 3, further comprising a binder between the first part and the second part of the split magnet to secure the first part and the second part of the split magnet together.

5. The aircraft electric motor of any preceding claim, further comprising a binder applied to the magnets to secure the magnets together and to the magnet support, and optionally wherein the binder comprises an epoxy material.

6. The aircraft electric motor of any preceding claim, further comprising a rotor wrap arranged about the magnet support and configured to structurally support the magnet support.

7. The aircraft electric motor of any preceding claim, wherein the magnet support comprises a protrusion that is positioned within the cut-out notch.

8. The aircraft electric motor of any preceding claim, wherein the rotor assembly comprises:
an outer rotor and an inner rotor, wherein the stator is arranged radially between the inner rotor and the outer rotor, and optionally wherein each of the inner rotor and the outer rotor comprise magnet sets with cut-out notches between adjacent magnet sets.

9. An aircraft comprising:
at least one aircraft electric motor;
at least one electrical device; and
a power distribution system configured to distribute power from the at least one electric motor to the at least one electrical device,
wherein the at least one aircraft electric motor comprises:
a rotor assembly comprising a plurality of magnets arranged on a magnet support;
an output shaft operably coupled to the rotor assembly; and
a stator comprising a support structure and at least one winding wrapped about a plurality of stator teeth, the stator configured to generate an electromagnetic field to cause rotation of the rotor assembly;
wherein the magnets are configured in sets arranged circumferentially about the rotor assembly, with each set having a cut-out notch at opposite ends of each set in the circumferential direction and wherein the cut-out notch is at least partially formed in an in-pole magnetization magnet having a radial orientation magnetization.

10. The aircraft of claim 9, wherein at least one in-pole magnetization magnet is a single magnet that is part of two adjacent sets of magnets.

11. The aircraft of claim 9 or 10, wherein at least one in-pole magnetization magnet is a split magnet, wherein a first part of the split magnet is part of a first set of magnets and a second part of the split magnetic is part of a second set of magnets, and optionally further comprising a binder between the first part and the second part of the split magnet to secure the first part and the second part of the split magnet together.

12. The aircraft of any of claims 9 to 11, further comprising a binder applied to the magnets to secure the magnets together and to the magnet support, and optionally wherein the binder comprises an epoxy material.

13. The aircraft of any of claims 9 to 12, further comprising a rotor wrap arranged about the magnet support and configured to structurally support the magnet support.

14. The aircraft of any of claims 9 to 13, wherein the magnet support comprises a protrusion that is positioned within the cut-out notch.

15. The aircraft of any of claims 9 to 14, wherein the rotor assembly comprises:
an outer rotor and an inner rotor, wherein the stator is arranged radially between the inner rotor and the outer rotor, and optionally, wherein each of the inner rotor and the outer rotor comprise magnet sets with cut-out notches between adjacent magnet sets.
